# EUROPEAN PATENT SPECIFICATION

(11) **EP 2 100 060 B1**
(45) Date of publication and mention of the grant of the patent: **30.03.2011**
(21) Application number: 06835687.2
(22) Date of filing: 27.12.2006
(51) Int. Cl.: F16H 61/662

(54) **METHOD FOR DETERMINING SLIP IN A FRICTION-TYPE CONTINUOUSLY VARIABLE TRANSMISSION AND A TRANSMISSION EQUIPED WITH MEANS FOR CARRYING OUT THE METHOD**
VERFAHREN ZUR SCHLUPFBESTIMMUNG IN EINEM STUFENLOSEN REIBUNGSGETRIEBE UND MIT MITTELN ZUR DURCHFÜHRUNG DES VERFAHRENS AUSGESTATTETES GETRIEBE
PROCÉDÉ POUR DÉTERMINER UN GLISSEMENT DANS UNE TRANSMISSION À VARIATION CONTINUE DE TYPE À FRICTION, ET TRANSMISSION ÉQUIPÉE DE MOYENS SERVANT À LA MISE EN OEUVRE DE CE PROCÉDÉ

(43) Date of publication of application: 16.09.2009
(73) Proprietor: Robert Bosch GmbH, 70442 Stuttgart (DE)
(72) Inventor: FAES, Paulus, Adrianus, Jospehus, Maria, 5045 ZH Tilburg (NL); VAN DER NOLL, Erik, 3311 TX Dordrecht (NL)
(74) Representative: Plevier, Gabriel Anton Johan Maria
(86) International application number: PCT/NL2006/000671
(87) International publication number: WO 2008/078980

(56) References cited:
- EP-A1- 1 427 953
- EP-A1- 1 526 309
- EP-A1- 1 579 127
- DE-A1- 2 755 424

## Description

The present invention firstly relates to a method for determining slip in a friction type continuously variable transmission, in particular slip of a drive belt of the transmission relative a pulley thereof, as defined in the preamble of the following claim 1, and as it is shown in document DE 2755 424 A1.

The continuously variable transmission itself is generally known and is for example described in the international patent publication WO-A-2006/016797 in the name of Applicant. The transmission is provided with a drive belt that is wrapped around and in frictional contact with two adjustable pulleys of the transmission for transmitting a rotational movement and accompanying torque between the pulleys at a variable transmission ratio. In this type of transmission each pulley exerts a controlled clamping force on the belt that determines the maximum frictional force that can be effected there between. Such clamping forces being continuously adjusted in relation to the instantaneous level of the torque to be transmitted by the transmission and the transmission ratio.

In a known method for controlling the clamping forces, the slip of the drive belt relative to the pulleys, i.e. a (tangential) speed difference there between, is determined and the clamping forces are then controlled in relation to such slip, e.g. to maintain an essentially constant belt slip value. In this manner, a favourably efficient clamping force control can be realised. However, for unlocking this potential, the actual, i.e. instantaneously prevailing value of the belt slip, or a transmission parameter that is representative thereof, needs to be determined. To this end, several measurement methods have already been proposed in the art.

For example, the circumference speed of the belt may be measured and compared with the tangential pulley speed at an effective radius of contact there between to determine the said slip value, as for instance described in US-A-4,575,367, EP-A-0 705 399 or EP-A-0 858 564. Another possibility is to correlate the belt slip value to the ratio between the transmission speed ratio, as quantified by the quotient of the rotational speeds of the two pulleys, and the transmission geometric ratio, as quantified by the quotient of the effective radii of curvature of the belt arc where it is wrapped around and in frictional contact with the two pulleys, as for instance described in EP-A-1 579 127.

A problem encountered with these known methods is that it is technically difficult to measure the said effective radius of curvature of the drive belt with sufficient reliability and accuracy. A high accuracy being required because the target belt slip value may be very small, in which case a high accuracy is required to even be able to detect the actual belt slip value. When a higher target belt slip value is applied, this parameter can of course be more easily to detected. However, in this case, when the actual belt slip value exceeds the said target slip value by even a small amount, a critical boundary may be passed causing irreversible damage to the system. This latter feature is also discussed in EP-A-1 579 127, in particular with reference to figures 2 and 3 thereof. So in this latter case, too it is necessary to be able to detect the actual belt slip value with high accuracy. It is, however, known from EP-A-1 427 953 that the belt arc at a pulley is only circular by approximation and, moreover, varies with the transmission torque and ratio. Thus the belt arc can not be accurately described or measured by a single radius of curvature.

An alternative method for measuring belt slip is disclosed in the German patent publication DE 27 55 424 A1. According to this document the slip between a drive belt and transmission a pulley is determined by correlating the angular velocity of the pulley with the angular velocity of the drive belt, which method does thus not rely on the radius of curvature of the belt. In stead, the belt's angular velocity is determined by timing a marker attached to the drive belt as it travels between two sensors that are placed mutually angularly separated along the circumference of the pulley. With this known method the angular velocity of the drive bell is, however, determined only once for every revolution thereof.

The present invention aims to overcome the above shortcoming of the known measurement methods. According to the invention such aim is realised by providing a different method for quantifying the drive belt slip, which method does in particular not rely on the parameter of the belt's radius of curvature at all.

The method according to the invention thereto includes the steps of:
- determining the angular velocity of both pulleys, the quotient whereof determining the transmission speed ratio;
- determining the angular velocity of the drive belt where it is wrapped in an arc at the pulley where the belt is actually slipping, the quotient of such drive belt angular velocity and the angular velocity of the respective other pulleys being representative of the transmission geometric ratio;
- correlating the drive belt slip to either the difference between or the quotient of the thus determined geometric ratio and the Inverse value of the speed ratio of the transmission.

It is remarked that typically the belt is slipping at the pulley where the radius of the wrapped arc is smallest, i.e. a driving pulley In a speed ratio that is smaller than 1 and a driven pulley in a speed ratio that is larger than 1, whereby the speed ratio of the transmission is defined as the driven pulley rotational speed divided by the driving pulley rotational speed.

It is further remarked that in case that the belt slip is correlated to the quotient of geometric ratio and inverse speed ratio, the parameter of the angular velocity of the respective other pulley can be divided out of the equations, in which case the above method may thus be simplified to:
- determining the angular velocity of the drive belt where it is wrapped in an arc at the pulley where the belt is actually slipping;
- determining the angular velocity of the latter pulley;
- correlating the drive belt slip to the quotient of such drive belt angular velocity and such pulley angular velocity.

In the above method(s) according to the invention the difficult to determine belt's radius of curvature is not a parameter, whereas the drive belt angular velocity can be measured relatively easily.

The invention is particularly suited to be applied in a transmission provided with a drive belt of the known, so-called pushbelt or Van Doorne type that comprises an endless tensile body, which is usually composed of one or two sets of a number of mutually radially nested flat metal rings, and a relatively large number of metal plates or transverse segments, which are provided on the tensile body oriented predominantly transversely to the circumference direction thereof. In this case, the angular velocity of the belt can be measured advantageously simply by using two Hall-sensors or the like that are placed at mutually separated tangential, i.e. angular positions along the said wrapped arc. When a belt plate passes by the Hall-sensors, an electric signal is induced therein, such that the signal of a first of the Hall-sensors may, for example, used to start a timer. When the same plate passes the second Hall-sensor, its signal is then used to again stop the timer, thus generating the time the belt plate takes to traverse the angle between the two sensors from which the angular speed of the belt may be calculated.

Although preferably each belt plate should be individually recognisable, e.g. by specific characteristics of the signal that is induced thereby, a sufficient accuracy can , according to the invention already be obtained if only a part of the belt plates can be specifically identified. In some cases even a single identifiable plate per belt may suffice. Such identifiable belt plates can of course be created by providing them with a special, e.g. individual shape, or by a magnetisation thereof.

In case only a single identifiable plate is used in a belt, preferably each belt plate is detected separately, whereas the signal induced by the individually identifiable plate is used to calibrate the system, i.e. by (re-)setting a counter that is counting the number of belt plates that have passed a specific plate sensor.

A more versatile and potentially more accurate method for quantifying the belt slip can be realised when the angular velocity of the drive belt is measured separately in both belt arcs, i.e. at both pulleys, and that the transmission geometric ratio is determined as the quotient thereof.

The invention also relates to a continuously variable transmission operated in accordance with one of the above methods for determining slip, as well as to a transmission provided with means for carrying out such method.

The invention will now be elucidated further along a drawing in which:
figure 1 provides the basic layout of the known continuously variable transmission with two pulleys and a drive belt,
figure 2 is a schematic side elevation of the known transmission, however provided with means for carrying out the method for detecting belt slip according to the present invention and
figure 3 provides a cross-section in longitudinal direction of a known type of drive belt that is particularly suited to be used in combination with the method according to the present invention.

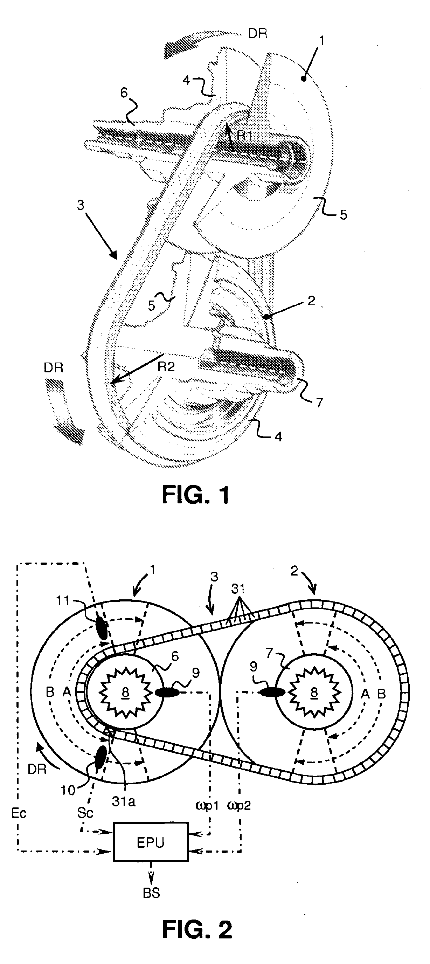

Figure 1 is a schematic depiction drawn in perspective of the known continuously variable transmission that is provided with two pulleys 1, 2 and a drive belt 3 that is wrapped around and in frictional contact with the pulleys 1, 2. The pulleys 1, 2 are each provided with two conical discs 4, 5 on a respective pulley shaft 6 or 7, between which discs 3, 4 a tapered groove of variable width is defined that accommodates a longitudinally bent part of the drive belt 3, an effective radius of contact R1; R2 existing there between. At least one of the discs 4 of each pulley 1 and 2 is axially movable towards the respective other disc 5, e.g. by means of a piston/cylinder-assembly (not shown), for exerting a respective clamping force on the belt 3. Hereby the level of a respective clamping force determines the drive force that can be transferred between the belt 3 and the respective pulley 1 or 2, whereas the ratio between the pulley clamping forces determines and is used to control the said effective contact radii R1 and R2 between the belt 3 and the respective pulleys 1 and 2. The so-called geometric transmission ratio being quantified as the quotient of these radii R1 and R2. This type of transmission and its operation and control are all well known in the art.

It is, amongst others, known to control the level of the said clamping forces in dependence on a driving force to be transmitted by the transmission. One possible control method comprises the steps of measuring an actual slip of the drive belt relative to the pulleys, i.e. a relative movement or speed difference there between, and of adjusting the clamping forces in relation to said actual slip, e.g. to make it coincide with a desired value. The current invention provides for a new method for determining the actual slip with a favourably high accuracy. The means for carrying out this method are illustrated in figure 2.

In figure 2 a schematised side elevation of the transmission is shown, wherein the pulleys 1, 2 and the pulley shafts 6, 7 are indicated by their outline only and wherein the drive belt 3 is shown to comprise a multitude of metal segments 31. The angular velocity or rotational speed, of both pulleys 1 and 2, i.e. respectively ωp1 and ωp2 is measured in a known manner, i.c. using an inductive tachometer comprising a respective profiled metal ring 8 and a corresponding inductive pulley speed sensor 9. The electric signals generated by the pulley speed sensors 9 in response to the rotation of the rings 8 are fed to an electronic processing unit EPU.

In figures 1 and 2 the transmission is depicted in its smallest speed ratio ωp2/ ωp1 wherein the wrapped arc A of the belt 3 on the first pulley 1 is as small as possible and the wrapped arc B of the belt 3 on the second pulley 2 is as large as possible, which corresponds to the largest geometric ratio R2/R1 of the transmission.

According to the invention two further inductive belt sensors 10 and 11 are provided in the transmission tangentially separated along the wrapped arc A of the belt 3 on the first pulley 1, i.e. at the location of the smaller one of the wrapped arcs A, B of the belt 3 where the belt slip occurs. In this respect, the belt sensors 10, 11 are preferably positioned close to the extreme sides of the smallest possible wrapped arc A, such that the sensors 10, 11 will cover any wrapped arc A, B of the belt 3, i.e. irrespective of the transmission ratio, such that their tangential position can be favourably fixed. The sensors 10, 11 are, however, preferably provided displaceable radially in relation to the radius of the wrapped arc A, B. Moreover, preferably a first belt sensor 10 is positioned near the start of the smallest wrapped arc A as seen in the direction of rotation DR of the belt 3, and a second belt sensor 11 is positioned near its end, which setup is indeed shown in figure 2. The electric signals generated by these belt sensors 10 and 11 by in response to the rotation of the belt 3, i.e. by the passing of the metal belt segments 31, are also fed to the electronic processing unit EPU.

With the above-described setup of the effective angular velocity of drive belt 3 can be measured as follows. The passing a specific metal segment 31 a of the belt 3 is determined by the first belt sensor 10, at which instant for instance a timer of the EPU is started, or a start time is recorded. When the specific metal segment 31a subsequently passes the second belt sensor 11, the said timer is stopped or a stop time is recorded, such that an elapsed time is made available. Alternatively, it may be opted not to identify individual segments 31, but rather to compare the overall signal of generated by first belt sensor 10 with the overall signal of the second belt sensor 11 and to determine the time lag or delay of the signal of the second sensor 11 relative to that of the first sensor 10. By dividing the angle of the wrapped arc A between the two belt sensors 10 and 11 by the thus determined elapsed time or time lag, the instantaneous drive belt angular velocity on the first pulley ωb1 is obtained.

The transmission geometric ratio R2/R1 can then be approximated with a comparatively high accuracy by the EPU as the quotient of the drive belt angular velocity at the first pulley ωb1 and the second pulley angular velocity ωp2. Finally, the EPU calculates a drive belt slip value BS as the quotient of the said approximated transmission geometric ratio ωb1/ωp2 and the inverse value of the transmission speed ratio ωp1/ ωp2, which value BS accurately approximates the actual slip of drive belt 3 relative to the pulleys 1, 2.

The above latter quotient and thus the calculation of the drive belt slip value BS can of course be simplified to the quotient of the first pulley drive belt angular velocity ωb1 and the first pulley angular velocity ωp1.

In the above method according to the invention the difficult to determine belt's effective contact or running radii R1, R2 are not a parameter, whereas the second pulley drive belt angular velocity ωb2 can be measured with favourably high accuracy.

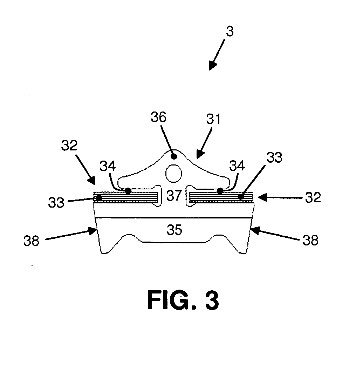

The invention is particularly suited to be applied in a transmission provided with a drive belt 3 of the known, so-called pushbelt or Van Doorne type that is schematically illustrated in a longitudinal cross-section in figure 3. The pushbelt 3 comprises an endless tensile body 32, which is composed of two sets of a number of 'nested', i.e. mutually radially stacked, continuous flat metal rings 33, and a relatively large number of metal segments 31, the so-called transverse elements 31. The sets of rings 33 are each mounted in a respective recess or slot 34 of the transverse elements 31, whereby the elements 31 can slide along the circumference of the tensile body 32 while being oriented predominantly transversely thereto. Each such slot 34 is provided on and opens towards a lateral side of the transverse element 31 in-between an effectively trapezoid-shaped lower part 35 and a an effectively arrowhead shaped upper part 36 of the element 20. These upper and lower parts 35 and 36 are interconnected via a central pillar part 37 of the transverse element 31. The transverse elements 31 of the belt 3 arrive into contact with the pulleys 1 and 2 during operation of the transmission through lateral contact or friction surfaces 38.

In combination with this known belt type, the belt sensors 10 and 11 can easily pick-up the passing of the metal segments 31, whereby in individual metal segment 31 a can be identified by the specific shape of the electric signal that is induced thereby in a respective sensor 10 and 11, or by counting the number of segments 31 that have passed the sensors 10, 11 in relation to the total number of metal segments 31 in the belt 3, or simply by mutually comparing the overall signals induced in the sensors 10, 11 by the passing the belt 3. Hereby, the identification of an individual metal segment 31 a or segments can of course be made more easy or reliable by providing the respective segment 31 a with a differing shape and/or material characteristics such as its magnetisation.

## Claims

1. Method for determining slip BS of a drive belt (3) of a continuously variable transmission relative to a pulley (1; 2) of the transmission, the drive belt (3) being wrapped around and in frictional contact with such pulleys (1, 2), which transmission further includes means (10, 11, EPU) for measuring the angular velocity ωb1 of the drive belt (3) where it Is wrapped around this one pulley (1), which means include an electronic processing unit (EPU) and two inductive belt sensors (10, 11) that are provided in the transmission tangentially separated along a wrapped arc (A) of the drive belt (3) on the pulley (1;) such that in the direction of rotation (DR) of the drive belt (3) a first belt sensor (10) precedes a second belt sensor (11), which first and second belt sensors (10, 11) generate respective electric signals in response to the said rotation of the drive belt (3) in the transmission that are fed to the electronic processing unit (EPU), wherein the transmission further includes means (8, 9) for measuring an angular velocity ωp1 of the said pulley (1; 2) and wherein the drive belt slip BS is correlated to the quotient of the drive belt angular velocity ωb1 and the pulley angular velocity ωp1, whereby the method includes the step of calculating the said angular velocity ωb1 of the drive belt (3) by determining the time that an individual plate (31) of the drive belt (3) takes to pass between the two belt sensors (10, 11) and by subsequently dividing the angle of tangential separation of the two belt sensors (10, 11) by the thus determined time, **characterised in that** the drive belt (3) is composed of at least an endless tensile body (32) and a multitude of metal plates (31) that are provided on and can slide along the circumference of the endless tensile body (32) oriented predominantly transversely to the circumference direction thereof, such that the said respective electric signals of the belt sensors (10, 11) are induced by the passing of the metal plates (31),
and **in that** the metal plates (31) are individually identified by;
- counting the metal plates (31) as they pass the belt sensors (10, 11) in relation to the total number of metal plates (31) of the drive belt (3), and/or by
- their individual shape or material characteristic that deviates from that of the respective other metal plates (31) of the drive belt (3) and that influences the electric signal that is induced thereby in a respective belt sensor (10; 11).

2. Method for determining drive belt slip BS according to claim 1, wherein the transmission further includes means (8, 9) for measuring the angular velocities ωp1, ωp2 of both pulleys (1, 2) and wherein the drive belt slip BS is correlated to either the difference or quotient between on the one hand the quotient of the angular velocity ωp1 of the said pulley (1; 2) and the angular velocity ωp2 of another one pulley (2; 1) of the transmission and on the other hand the quotient of the drive belt angular velocity ωb1 and the angular velocity ωp2 of the said another one pulley (2; 1).

## Patentansprüche

1. Verfahren zur Bestimmung von Schlupf BS eines Antriebsriemens (3) eines stufenlosen Getriebes bezüglich einer Rolle (1; 2) des Getriebes, wobei der Antriebsriemen (3) solche Rollen (1, 2) umhüllt und in Reibkontakt mit ihnen steht, wobei das Getriebe weiterhin Mittel (10, 11, EPU) zum Messen der Winkelgeschwindigkeit ωb1 des Antriebsriemens (3) enthält, wo dieser eine Rolle (1) umhüllt, wobei diese Mittel eine elektronische Verarbeitungseinheit (EPU) und zwei induktive Riemensensoren (10, 11) enthalten, die in dem Getriebe tangential getrennt entlang einem Umhüllungsbogen (A) des Antriebsriemens (3) auf der Rolle (1) vorgesehen sind, so dass in der Drehrichtung (DR) des Antriebsriemens (3) ein erster Riemensensor (10) einem zweiten Riemensensor (11) vorangeht, wobei der erste und der zweite Riemensensor (10, 11) als Reaktion auf die Drehung des Antriebsriemens (3) in dem Getriebe jeweilige elektrische Signale erzeugen, die der elektronischen Verarbeitungseinheit (EPU) zugeführt werden, wobei das Getriebe weiterhin Mittel (8, 9) zum Messen einer Winkelgeschwindigkeit ωp1 der Rolle (1;2) enthält und wobei der Antriebsriemenschlupf (BS) zum Quotienten aus der Winkelgeschwindigkeit ωb1 des Antriebsriemens und der Winkelgeschwindigkeit ωp1 des Riemens korreliert wird, wobei das Verfahren den Schritt des Berechnens der Winkelgeschwindigkeit ωb1 des Antriebsriemens (3) durch Ermitteln der Zeit, die eine einzelne Platte (31) des Antriebsriemens (3) benötigt, um zwischen den beiden Riemensensoren (10, 11) zu passieren, und durch anschließendes Dividieren des Tangentialwinkelabstands der beiden Riemensensoren (10, 11) durch die so ermittelte Zeit umfasst, **dadurch gekennzeichnet, dass** der Antriebsriemen (3) aus mindestens einem Endloszugkörper (32) und einer Vielzahl von Metallplatten (31) besteht, die auf dem Umfang des Endloszugkörpers (32) vorgesehen sind und daran entlang gleiten können, wobei sie hauptsächlich quer zur Umfangsrichtung davon ausgerichtet sind, so dass die jeweiligen elektrischen Signale der Riemensensoren (10, 11) durch Passieren der Metallplatten (31) induziert werden, und dass die Metallplatten (31) durch Folgendes einzeln identifiziert werden:
- Zählen der Metallplatten (31), wenn sie die Riemensensoren (10, 11) passieren, bezüglich der Gesamtzahl der Metallplatten (31) des Antriebsriemens (3) und/oder durch
- ihre individuelle Form oder Materialeigenschaft, die von der der jeweiligen anderen Metallplatten (31) des Antriebsriemens (3) abweicht und die das elektrische Signal beeinflusst, das **dadurch** in einem jeweiligen Gurtsensor (10;11) induziert wird.

2. Verfahren zur Bestimmung von Antriebsgurtschlupf BS nach Anspruch 1, wobei das Getriebe weiterhin Mittel (8, 9) zum Messen der Winkelgeschwindigkeiten ωp1, ωp2 beider Rollen (1, 2) enthält, und wobei der Antriebsriemenschlupf BS entweder zu der Differenz zwischen oder dem Quotienten aus einerseits dem Quotienten aus der Winkelgeschwindigkeit ωp1 der Rolle (1; 2) und der Winkelgeschwindigkeit ωp2 einer anderen Rolle (2; 1) des Getriebes und andererseits dem Quotienten der Winkelgeschwindigkeit ωb1 des Antriebsriemens und der Winkelgeschwindigkeit ωp2 der anderen Rolle (2; 1) korreliert wird.

## Revendications

1. Procédé pour déterminer un glissement BS d'une courroie d'entraînement (3) d'une transmission à variation continue par rapport à une poulie (1 ; 2) de la transmission, la courroie d'entraînement (3) étant enroulée autour de ces poulies (1, 2) et étant en contact de friction avec elles, laquelle transmission comporte en outre des moyens (10, 11, EPU) pour mesurer la vitesse angulaire ωb1 de la courroie d'entraînement (3) où elle est enroulée autour de cette poulie (1), lesquels moyens comportent une unité de traitement électronique (EPU) et deux capteurs de courroie inductifs (10, 11) qui sont prévus dans la transmission et séparés tangentiellement le long d'un arc enveloppé (A) de la courroie d'entraînement (3) sur la poulie (1), de telle sorte que dans le sens de rotation (DR) de la courroie d'entraînement (3), un premier capteur de courroie (10) précède un deuxième capteur de courroie (11), lesquels premier et deuxième capteurs de courroie (10, 11) produisent des signaux électriques respectifs en réponse à ladite rotation de la courroie d'entraînement (3) dans la transmission, lesquels sont envoyés à l'unité de traitement électronique (EPU), la transmission comportant en outre des moyens (8, 9) pour mesurer une vitesse angulaire ωp1 de ladite poulie (1 ; 2) et le glissement BS de la courroie d'entraînement étant corrélé au quotient de la vitesse angulaire ωb1 de la courroie d'entraînement et de la vitesse angulaire de la poulie ωp1, le procédé comportant l'étape consistant à calculer ladite vitesse angulaire ωb1 de la courroie d'entraînement (3) en déterminant le temps pris par une plaque individuelle (31) de la courroie d'entraînement (3) pour passer entre les deux capteurs de courroie (10, 11) et en divisant ensuite l'angle de séparation tangentielle des deux capteurs de courroie (10, 11) par le temps ainsi déterminé, **caractérisé en ce que** la courroie d'entraînement (3) est composée d'au moins un corps de traction sans fin (32) et d'une multitude de plaques métalliques (31) qui sont prévues sur et peuvent glisser le long de la circonférence du corps de traction sans fin (32) orienté principalement transversalement à la direction circonférentielle de celui-ci, de telle sorte que lesdits signaux électriques respectifs des capteurs de courroie (10, 11) soient induits par le passage des plaques métalliques (31), et **en ce que** les plaques métalliques (31) sont identifiées individuellement par :
- le comptage des plaques métalliques (31) à mesure qu'elles passent devant les capteurs de courroie (10, 11) par rapport au nombre total des plaques métalliques (31) de la courroie d'entraînement (3), et/ou par
- leur forme individuelle ou leur caractéristique de matériau qui s'écarte de celle des autres plaques métalliques respectives (31) de la courroie d'entraînement (3) et qui influence le signal électrique qui est induit par celles-ci dans un capteur de courroie respectif (10 ; 11).

2. Procédé pour déterminer un glissement BS d'une courroie d'entraînement selon la revendication 1, dans lequel la transmission comporte en outre des moyens (8, 9) pour mesurer les vitesses angulaires ωp1, ωp2 des deux poulies (1, 2) et dans lequel le glissement BS de la courroie d'entraînement est corrélé soit à la différence soit au quotient entre, d'une part, le quotient de la vitesse angulaire ωp1 de ladite poulie (1 ; 2) et la vitesse angulaire ωp2 d'une autre poulie (2 ; 1) de la transmission et d'autre part le quotient de la vitesse angulaire de la courroie d'entraînement ωb1 et la vitesse angulaire ωp2 de ladite autre poulie (2 ; 1).
